# EUROPEAN PATENT SPECIFICATION

(11) **EP 3 111 782 B1**
(45) Date of publication and mention of the grant of the patent: **14.04.2021**
(21) Application number: 15755471.8
(22) Date of filing: 25.02.2015
(51) Int. Cl.: A23N 12/02

(54) **DEVICE FOR OPTIMIZING FRUIT WASHING**
VORRICHTUNG ZUR OPTIMIERUNG DES WASCHENS VON FRÜCHTEN
DISPOSITIF POUR OPTIMISER LE LAVAGE DE FRUITS

(30) Priority: 26.02.2014 ES 201430263
(43) Date of publication of application: 04.01.2017
(73) Proprietor: Tecnidex, Técnicas De Desinfección, S.A.U., 46988 Paterna (Valencia) (ES)
(72) Inventor: GARCÍA PORTILLO, Manuel, E-46980 Paterna (Valencia) (ES)
(74) Representative: Ungria López, Javier
(86) International application number: PCT/ES2015/070132
(87) International publication number: WO 2015/128529

(56) References cited:
- EP-A2- 0 983 730
- CH-A5- 571 897
- ES-A1- 2 137 869
- ES-U- 1 078 017
- ES-U- 1 078 017
- FR-A- 1 211 192
- US-A- 4 842 880
- US-A- 4 990 351
- US-A- 5 918 610
- US-A1- 2008 135 639

## Description

### OBJECT OF THE INVENTION

The invention consists of a new device that allows the optimization of the washing of fruits and similar foods by means of spraying, such as for example vegetables, in post-harvest treatment facilities where fruit is subjected to different processes of washing, disinfecting, rinsing and drying.

The invention discloses a new device that provides a washing and disinfecting for fruit that is better than current systems, especially regarding the water consumption per unit product washed, which in turns also makes significant savings during the subsequent drying process as the product is treated with a lower volume of water.

### BACKGROUND OF THE INVENTION

In warehouses for fruit, all the fruit destined for consumption is subjected to several treatments in order to improve their presentation by eliminating the dirt they may have carried from the farms, and also to protect them from mould and other microorganisms, which retains the properties of the fruit better, allowing it to be stored for longer. These treatments consist mainly of washing and spraying them with detergents and fungicides.

In order to achieve this, several known systems are used in which the fruit is placed on a conveyor belt after being arranged according to size, while a pipe comprising a series of nozzles set transversally above the conveyor belt sprays water mixed with soap on the fruit in order to wash it. These systems use large volumes of water, with average consumption measured between 2,000 and 2,500 litres/hour, which is problem for the environment, as for the increase of the price of the water as for the duty of preparing the water according to the parameters set by the legislation for the flowing

It is worth mentioning application ES1078017U, which belongs to the same owner as the present invention, that describes a device for applying products by means of spraying, of the type described above, where the amount of product applied is regulated depending on the amount of product on the conveyor belt and the weight of each of the pieces of product on the conveyor belt, thus reducing water consumption during washing. It should also be highlighted at this point that in the state of the art a process of rinsing is performed after washing, for this conventional devices comprise rinsing means that in turn comprise pipes with nozzles set transversally across the conveyor belt in order to spray water mixed fungicide, which rinses the fruit that has been previously washed. This rinsing process is not optimal since its configuration prevents it from being optimized

It is also known the patent CH 571 897 A5 which discloses a device for fruit washing comprising a conveyor belt onto which potatoes to be washed is deposited. The device comprises a regulating mechanism in the sense of controlling the exit of the spray liquid as a function of the quantity of moving objects detected by a sensor device, and also comprises injection nozzles arranged in staggered configuration.

It is also known the European patent application with publication number EP0983730A2 which generally describes an apparatus for washing foods and more particularly to an apparatus for washing foods while foreign matters such as insects, mud, pebbles, fish scales or the likes are removed from the foods. The apparatus having several water jet stream layers placed an angle "α" in relation to each other so that the quantity and the pressure of the water jet stream layers should be larger as the foods are harder.

In addition, application U200501944 describes a device for treating the waste water resulting from washing and rinsing fruit and similar foods.

### DESCRIPTION OF THE INVENTION

In order to achieve the goals and overcome the drawbacks mentioned in the above paragraphs, the invention proposes a new device for washing fruit that optimizes the process of washing by reducing the amount of water needed to wash and rinse the fruit, which also reduces the amount of energy used to dry the fruit since the fruit already washed and rinsed has a lower a lower volume of water on its surface.

The invention is applied on devices comprising a conveyor belt onto which fruit is deposited for washing and, above the conveyor belt, includes at least means for rinsing fruit, which are provided with electronically adjustable nozzles operated by a controller configured to generate a frequency signal in proportion to the amount of fruit deposited on the conveyor belt and to apply a proportional volume of water that is based on the fruit deposited on the conveyor belt.

The main novelty consists in the rinsing means comprising at least two rinsing pipes, each of which has nozzles controlled by the controller. The rinsing pipes are connected to a common water supply at constant pressure, in order to provide said nozzles with a uniform volume of rinsing water, which is proportional to the amount of fruit deposited on the conveyor belt.

According to the invention, the nozzles of each of the rinsing pipes are arranged in staggered configuration and separated at a distance that prevents any overlapping of the water spray that covers the whole width of the conveyor belt. Preferably , these nozzles are of the flat cone type with high conicity in order to cover a bigger spraying area. The configuration described herein prevents wasting the water that is sprayed between the rollers of the conveyor belt, as it happens currently. As for the size of the droplet of water, a small water drop was selected, which allows the device to use small volumes of water without compromising its maintenance due to unwanted muffling. This increases the uniformity of water consumption per nozzle, providing greater uniformity in how the water is applied.

In the invention, the conveyor belt comprises means for washing the fruit, placed above the conveyor belt and before the means for rinsing the fruit, provided with at least one washing pipe with electronically adjustable nozzles, such that the washing pipe of said means for washing is connected to a common water supply at constant pressure in order to provide said nozzles with a uniform washing volume in proportion to the amount of fruit deposited on the conveyor belt, so that water consumption is reduced both during the washing and the rinsing processes.

Additionally, in the invention the water supply comprises a fungicide dispenser, such as for example, a biocide, before it is connected to the rinsing pipes, and the washing pipes comprise a detergent dispenser. In this way, the fungicide dispenser and the detergent dispenser are connected to the controller that regulates how each of them is applied during washing and rinsing in proportion to the amount of fruit deposited on the conveyor belt. In addition to saving water, this configuration also makes savings in the amount of fungicide and detergent applied.

Finally, it should be highlighted that the controller is also programmed to keep track of the consumption of water, detergent and fungicide for its subsequent statistical analysis, which allows for these parameters to be controlled. This allows it to use less reagents and products for water treatment, controls, and to make savings in management and treatment of waste water.

Therefore, the invention consists of using two rinsing pipes with electronically adjustable nozzles arranged one after the other, which are activated by means of electric signals for opening and closing, the actuation frequency of which determines the volume of water applied, said actuation frequency being dependant on the values detected by the system described in the utility model U201231146, and which in any case entails not exceeding 100 litres of water per hour in total, as opposed to the 2,100 litres used by current washing systems.

As a result, the invention minimises the volume of water with detergents in proportion to the flow of fruit. According to what has been described above, the volume of water with fungicides is also minimised.

In addition, the configuration disclosed allows the fruit pre-drying tunnels to be programmed at a temperature below the ones used by current systems, since the fruit washed and rinsed comes out of the device with a lower volume of water on its surface, making savings of around 5% per each degree reduced.

Due to the lower water consumption, CO2 emissions are also reduced and wastewater is also minimised.

Hereinafter, in order to give a better understanding of the description, the object of the invention has been detailed in a single drawing that is an integral part of the report and is for illustration purposes and without limitation.

### DESCRIPTION OF A SAMPLE EMBODIMENT

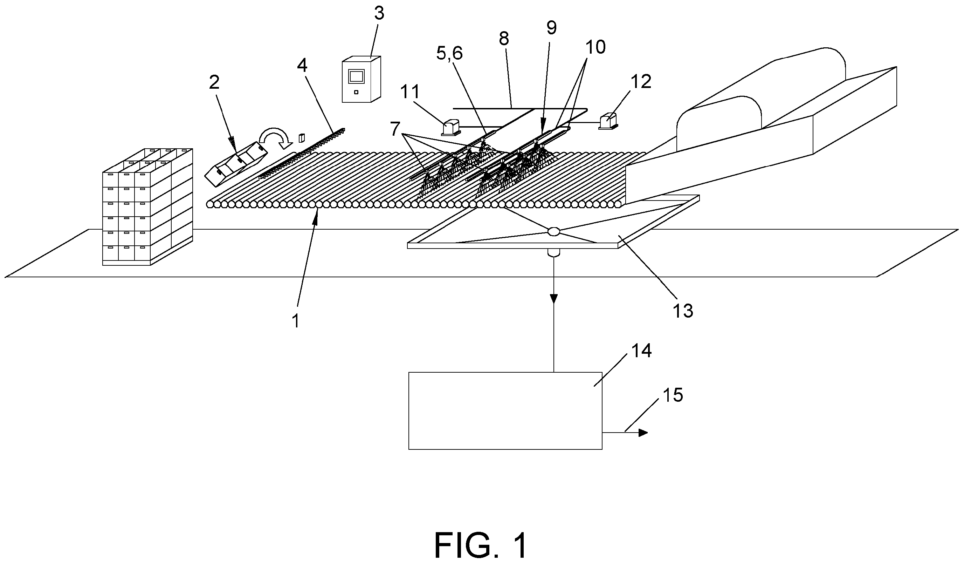

Figure 1 shows a diagram of a sample embodiment of the device of the invention.

### DESCRIPTION OF AN EMBODIMENT

The invention based on the drawing mentioned above is described below.

The invention is applied on conveyor belts 1 onto which fruit 2 for washing is deposited, such that it comprises a controller 3 which by means of sensors 4 is configured to detect the amount of fruit deposited in the conveyor belt 1 and generate a frequency signal in proportion to the amount of fruit deposited on said conveyor belt 1. An example of the controller 3 may be the one disclosed in the Spanish utility model with application number 201231146, which therefore will not be described in greater detail.

There are washing means 5 above the conveyor belt 1, comprised of washing pipes 6 with electronically adjustable nozzles 7, which can be electronically opened and closed and is connected to a common water supply 8 at constant pressure. The nozzles 7 are connected to the controller 3 to regulate how the nozzles 7 are opened and closed, such that they provide a volume of water sprayed proportional to the amount of fruit deposited on the conveyor belt 1 by generating a nozzle actuation signal, the frequency of which determines the volume of water applied to washing the fruit, since said frequency signal is proportional to the amount and volume of fruits for washing placed on the machine.

After the washing means 5, there are rinsing means 9 that have a novel configuration that makes to rinse the fruit easier, and which comprise two rinsing pipes 10 with nozzles 7, which are also regulated by the controller 3. Said rinsing pipes 10 are connected to a common water supply 8 so that they provide a volume of water spray proportional to the amount of fruit deposited on the conveyor belt 1

The common water supply 8, before it reaches the washing pipes 6 of the washing means 5, is connected to a detergent dispenser 11, and, before it reaches the two rinsing pipes 10 of the rinsing means 9, it is connected to a biocide dispenser 12. Both the biocide and the detergent dispensers 11 are regulated by the controller 3 such that the detergent and the biocide are applied proportionally to the frequency of the opening signal of the nozzles and, therefore, based on the amount of fruit deposited in the conveyor belt 1.

The nozzles 7 of each of the pipes 10 of the rinsing means 9 are arranged one after another and in a staggered configuration, separated at a distance that prevents any overlapping of water spray in order to cover the entirety of the conveyor belt 1.

The configuration described minimises the volume of water with detergent and biocide in proportion to the flow of fruit, which at any rate is not higher than 100 litres of water per hour in total, as opposed to the 2,100 litres used by current washing systems.

An electronically adjustable nozzle operating in on-off cycles was selected, which is of the flat cone type with high conicity, which can cover the greatest area possible with the lowest number of nozzles 7 by applying the water spray over the entirety of the rollers that comprise the conveyor belt, which avoids wasting the water that is sprayed between the rollers of the conveyor belt, as it happens currently. As for the size of the droplet of water, a small water drop was selected, which allows the device to use small volumes of water without compromising its maintenance due to unwanted muffling. This increases the uniformity of water consumption per nozzle, providing greater uniformity on how the water is applied.

The controller 3 keeps track of the consumption of water, detergent and biocide, in order to subsequently use them for statistical analysis. This allows the invention to use less reagents and products for water treatment, controls, and savings in management and treatment of waste water, since the wastewater produced by washing and rinsing is collected in a tank 13 so that it can be treated by means of a treatment device 14, such as for example the one described in patent with application number 200501944, so that the waste treatment process is easier and simpler thanks to using less water, detergent and biocide.

Once the fruit has been washed and rinsed, it is dried, so that the configuration described allows the pre-drying tunnels to be programmed at a temperature below the ones used by current systems, making savings of around 5% per each degree reduced. This is because the fruit washed and rinsed comes out of the device with a lower volume of water on its surface.

## Claims

1. A device for optimizing fruit washing, comprising a conveyor belt (1) onto which fruit (2) to be washed is deposited; the device comprises a controller (3) configured to generate a frequency signal in proportion to the amount of fruit deposited on the conveyor belt (1), and to apply a proportional volume of water based on the fruit deposited on the conveyor belt; **characterized in that** the device comprises rinsing means (9) which in turn comprise at least two rinsing pipes (10), each of which has electronically adjustable nozzles (7) operating in on-off cycles and controlled by the controller (3), being the nozzles (7) of each of the rinsing pipes (10) arranged in staggered configuration and separated at a distance without overlapping of the water spray that covers the whole width of the conveyor belt (1); said rinsing pipes (10) also connected to a common water supply (8) at constant pressure, in order to provide said nozzles (7) with a uniform volume of rinsing water which is proportional to the amount of fruit deposited on the conveyor belt (1).

2. A device for optimizing fruit washing, according to claims 1, **characterized in that** the nozzles (7) are of the flat cone type in order to cover the highest spraying area possible.

3. A device for optimizing fruit washing, according to claim 1, **characterized in that** above the conveyor belt (1) and before the means for rinsing the fruit (9), it comprises means for washing the fruit (5), which are provided with at least one washing pipe (6) with nozzles (7), so that said washing pipe (6) is connected to a common water supply (8) at constant pressure, so that said nozzles (7) provide with a uniform volume of water in proportion to the amount of fruit deposited on the conveyor belt (1).

4. A device for optimizing fruit washing, according to claim 3, **characterized in that** the common water supply (8) before the water supply is connected to the rinsing pipes (10) of the rinsing means (9) comprises a fungicide dispenser (12) while the washing pipes (6) comprise a detergent dispenser (11); both the washing means (9) and the detergent dispenser (12) being connected to the controller (3) to regulate the application of each of them during washing and rinsing, which is in proportion to the amount of fruit deposited on the conveyor belt (1).

5. A device for optimizing fruit washing, according to claim 4, **characterized in that** the controller (3) is programmed to keep track of the consumption of water, detergent and fungicide for its subsequent statistical analysis.

## Patentansprüche

1. Vorrichtung zum Optimieren des Waschens von Früchten, umfassend ein Förderband (1), auf dem zu waschende Früchte (2) abgelegt werden; wobei die Vorrichtung eine Steuerung (3) umfasst, die dazu konfiguriert ist, ein Frequenzsignal im Verhältnis zur Menge der auf dem Förderband (1) abgelegten Früchte zu erzeugen und ein proportionales Wasservolumen basierend auf den auf dem Förderband abgelegten Früchten aufzubringen; **dadurch gekennzeichnet, dass** die Vorrichtung Spülmittel (9) umfasst, die ihrerseits mindestens zwei Spülrohre (10) umfassen, von denen jedes elektronisch einstellbare Düsen (7) aufweist, die in Ein-Aus-Zyklen arbeiten und von der Steuerung (3) gesteuert werden, wobei die Düsen (7) jedes der Spülrohre (10) in gestaffelter Konfiguration angeordnet und in einem Abstand ohne Überlappung des Wasserstrahls getrennt sind, der die gesamte Breite des Förderbandes (1) abdeckt; wobei die Spülrohre (10) auch an eine gemeinsame Wasserversorgung (8) mit konstantem Druck angeschlossen sind, um die Düsen (7) mit einem gleichmäßigen Spülwasservolumen zu versorgen, das proportional zu der auf dem Förderband (1) abgelagerten Menge an Obst ist.

2. Vorrichtung zum Optimieren des Waschens von Früchten nach Anspruch 1, **dadurch gekennzeichnet, dass** die Düsen (7) vom Flachkegeltyp sind, um eine möglichst große Sprühfläche abzudecken.

3. Vorrichtung zum Optimieren des Waschens von Früchten nach Anspruch 1, **dadurch gekennzeichnet, dass** sie oberhalb des Förderbandes (1) und vor den Mitteln zum Spülen der Früchte (9) Mittel zum Waschen der Früchte (5) umfasst, die mit mindestens einem Waschrohr (6) mit Düsen (7) versehen sind, so dass das Waschrohr (6) mit einer gemeinsamen Wasserversorgung (8) mit konstantem Druck verbunden ist, so dass die Düsen (7) mit einem gleichmäßigen Wasservolumen im Verhältnis zur Menge der auf dem Förderband (1) abgelegten Früchte versehen sind.

4. Vorrichtung zum Optimieren des Waschens von Früchten nach Anspruch 3, **dadurch gekennzeichnet, dass** die gemeinsame Wasserversorgung (8) vor der Wasserversorgung mit den Spülrohren (10) den Spülmitteln (9) einen Fungizidspender (12) umfasst, während die Waschrohre (6) einen Detergensspender (11) umfassen; wobei sowohl die Waschmittel (9) als auch der Detergensspender (12) mit der Steuerung (3) verbunden sind, um die Anwendung von jedem von ihnen während des Waschens und Spülens zu regulieren, was im Verhältnis zu der Menge der auf dem Förderband (1) abgelegten Früchte erfolgt.

5. Vorrichtung zum Optimieren des Waschens von Früchten nach Anspruch 4, **dadurch gekennzeichnet, dass** die Steuerung (3) so programmiert ist, dass sie den Verbrauch von Wasser, Detergens und Fungizid für die anschließende statistische Analyse verfolgt.

## Revendications

1. Dispositif pour optimiser le lavage des fruits, comprenant une courroie convoyeuse (1) sur laquelle les fruits (2) devant être lavés sont déposés ; le dispositif comprenant un contrôleur (3) configuré pour générer un signal de fréquence proportionnel à la quantité de fruits déposés sur la courroie convoyeuse (1), et pour appliquer un volume proportionnel d'eau sur la base des fruits déposés sur la courroie convoyeuse ; **caractérisé en ce que** le dispositif comprend des moyens de rinçage (9) qui à leur tour comprennent au moins deux tuyaux de rinçage (10) dont chacun a des buses ajustables électroniquement (7) opérant en cycles de marche-arrêt et commandées par le contrôleur (3), les buses (7) de chacun des tuyaux de rinçage (10) étant disposées en configuration étagée et séparées par une certaine distance sans chevaucher la pulvérisation d'eau qui couvre toute la largeur de la courroie convoyeuse (1) ; lesdits tuyaux de rinçage (10) étant aussi connectés à une alimentation en eau commune (8) sous une pression constante, afin de fournir auxdites buses (7) un volume uniforme d'eau de rinçage qui est proportionnel à la quantité de fruits déposés sur la courroie convoyeuse (1).

2. Dispositif pour optimiser le lavage des fruits selon la revendication 1, **caractérisé en ce que** les buses (7) sont du type à cône plat afin de couvrir la plus grande surface de pulvérisation possible.

3. Dispositif pour optimiser le lavage des fruits selon la revendication 1, **caractérisé en ce que**, au-dessus de la courroie convoyeuse (1) et avant les moyens pour rincer les fruits (9), il comprend des moyens pour laver les fruits (5), qui sont dotés d'au moins un tuyau de lavage (6) avec des buses (7), de façon que ledit tuyau de lavage (6) soit connecté à une alimentation en eau commune (8) sous une pression constante, de façon que lesdites buses (7) soient dotées d'un volume uniforme d'eau proportionnel à la quantité de fruits déposés sur la courroie convoyeuse (1).

4. Dispositif pour optimiser le lavage des fruits selon la revendication 3, **caractérisé en ce que** l'alimentation en eau commune (8) avant que l'alimentation en eau soit connectée aux tuyaux de rinçage (10) des moyens de rinçage (9) comprend un distributeur de fongicide (12) tandis que les tuyaux de lavage (6) comprennent un distributeur de détergent (11) ; tant les moyens de lavage (9) que le distributeur de détergent (12) étant connectés au contrôleur (3) pour qu'il régule l'application de chacun d'eux durant le lavage et le rinçage, qui est proportionnel à la quantité de fruits déposés sur la courroie convoyeuse (1).

5. Dispositif pour optimiser le lavage des fruits selon la revendication 4, **caractérisé en ce que** le contrôleur (3) est programmé pour conserver une trace de la consommation d'eau, de détergent et de fongicide pour son analyse statistique subséquente.
